Europäisches Patentamt

European Patent Office

Office européen des brevets

(19)

(11) Veröffentlichungsnummer: **0 037 987**
B1

(12) **EUROPÄISCHE PATENTSCHRIFT**

(45) Veröffentlichungstag der Patentschrift:
07.10.87

(21) Anmeldenummer: 81102524.6

(22) Anmeldetag: 03.04.81

(51) Int. Cl.⁴: **B 29 C 39/12,** B 29 C 67/20,
F 03 D 1/06, B 64 C 3/24

(54) Verfahren zur Herstellung von schaumkerngestützten Formkörpern wie Flügeln, Rotorblättern etc. grosser Längen- und Breitenausdehnung.

(30) Priorität: 15.04.80 DE 3014347

(43) Veröffentlichungstag der Anmeldung:
21.10.81 Patentblatt 81/42

(45) Bekanntmachung des Hinweises auf die Patenterteilung:
07.10.87 Patentblatt 87/41

(84) Benannte Vertragsstaaten:
BE FR NL

(56) Entgegenhaltungen:
DE - A - 1 531 369
DE - A - 1 629 628
DE - B - 1 045 810
FR - A - 2 186 380
US - A - 3 055 437

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Hahn, Michael, Dipl.-Ing., Bahnhofstrasse 15 b, D-8012 Ottobrunn (DE)**
Erfinder: **Wackerle, Peter-Martin, Dipl.-Ing., Oderweg 7, D-8012 Ottobrunn (DE)**

ACTORUM AG

## Beschreibung

Die Erfindung bezieht sich auf ein Verfahren zur Herstellung von schaumgestützten Formkörpern wie Flügel, Rotorblätter etc. gemäss dem Gattungsbegriff des Anspruchs 1 (DE-B-10 45 810).

Bekannt sind Verfahren für die Herstellung von Flügeln für Segelflugzeuge etc., also für relativ kleine Bauelemente. Bei diesen bekannten Verfahren müssen die verwendeten Formen schliessbar sein, d.h. für die dort angestrebte Holmbauweise ist ein sehr grosser Aufwand an Fertigungsmaterial erforderlich. Bei der Stegbauweise treten Passungsprobleme auf und ausserdem ist während der Fertigung keine Kontrollmöglichkeit gegeben. Sollen nun grosse Formkörper, wie beispielsweise Rotorblätter für grosse Windenergieanlagen etc. hergestellt werden, so verbieten sich diese Verfahren allein aus dem schlechten Verhältnis von Masse zu Steifigkeit.

Für die Holmbauweise und für die Schalenbauweise mit vorgefertigtem Schaumkern gilt ferner folgendes: Bei der Holmbauweise ist die Masse bei gleicher Steifigkeit höher als bei der Schalenbauweise und die Formen müssen wegen der Konturgenauigkeit der dünnwandigen Schalen schliessbar sein, wobei die Verbindung Holm-Aussenschale über kleine, schwer kontrollierbare Klebflächen erfolgt.

Bei der Schalenbauweise mit vorgefertigtem Schaumkern treten im vorliegenden Falle folgende Nachteile auf: einmal ist der Schaumkern wegen seiner Grösse und aufwendigen geometrischen Ausgestaltung nicht wirtschaftlich herstellbar und zum andernmal kann die Verbindung von Kern zur Schale nur im «Nass-in-Nass-Verfahren» mit schliessbaren Formen von guter Qualität sein.

Durch die DE-B-1 045 810 ist ein Formkörper bekanntgeworden, der sich aus zwei Schichten mit dazwischen gelagerten Kunststoffstrangkernen und dem Schaumstoffkern zusammensetzt. Durch die zweimalige Vollkernbildung ist aber eine ganz beträchtliche Gewichtserhöhung gegeben, die vor allem bei grossen Rotorblättern unzulässig ist. Auch wird bei dieser Konzeption der Schaumkörper frei ausgeschäumt und ist daher mit den oben erwähnten Nachteilen für grosse Bauteile behaftet. Abgesehen von dem vorgeschlagenen Quetschvorgang für die Kunststoffstränge, der äusserst zeit- und montageaufwendig ist, ist das Produkt danach auch viel zu ungenau, denn der Fasergewebestab hinterlässt nach dem Quetschen auf grossen Längen sehr unterschiedlich gewölbte Kanten, die bei einer Fläche aus vielen aneinandergelegten Stäben unkontrollierbare Freiräume schafft, die mit Laminat ausgefüllt werden müssen. Dadurch entstehen Unwuchten, Gewichtsunterschiede und Unstabilitäten, die bei einer einseitigen Lagerung solchermassen hergestellter Rotorblätter schwerwiegende Folgen nach sich ziehen.

Der vorliegenden Erfindung liegt nun die Aufgabe zugrunde, ein Verfahren der eingangs genannten Art zu schaffen, das nicht nur die aufgeführten Nachteile der Verfahren des Standes der Technik beseitigt, sondern eine Grossflügel- bzw. Grossrotorherstellung in getrennten und nicht schliessbaren Formen erlaubt, wobei durch die vorgeschlagenen Verfahrensschritte eine laufende Kontrolle der inneren Struktur und Fehlerkorrekturen während der Herstellung möglich sein sollen.

Diese Aufgabe wird durch die im Patentanspruch 1 niedergelegten Massnahmen in überraschend einfacher und zuverlässiger Weise gelöst. Die abhängigen Ansprüche 2 bis 5 enthalten zweckmässige Ausführungsformen der Erfindung. In der nachfolgenden Beschreibung ist ein Ausführungsbeispiel der Erfindung beschrieben und erläutert sowie in der Zeichnung dargestellt. Es zeigen:

Fig. 1 einen Teilquerschnitt eines nach dem Verfahren hergestellten Formkörpers eines Grossrotorblattes,

Fig. 2 eine perspektivische Draufsicht des Aufbaus der Saug-Druckseitenschale des Grossrotorblattes gemäss Fig. 1,

Fig. 3 den inneren Aufbau des Grossflügelblattes gemäss Fig. 1 und 2,

Fig. 4 einen Teilquerschnitt des Schaumkernes und des Hinterkantenschaumes mit Übermass,

Fig. 5 einen Teilquerschnitt gemäss Fig. 4 nach Bearbeitung zur Fertigstellung,

Fig. 6 einen Teilquerschnitt der beiden Grossrotorblattflächen beim Zusammenfügvorgang.

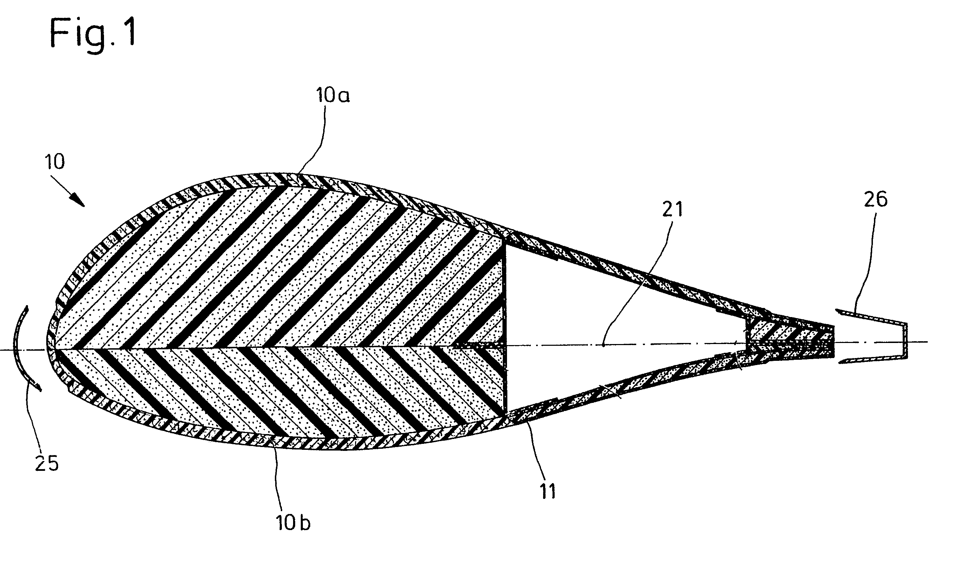

Der in den Fig. 1 gezeigte Formkörper 10 eines Grossrotorblattes wird gemäss dem vorgeschlagenen Verfahren wie folgt hergestellt:

Zuerst wird die Schale des Flügels bzw. Rotorblattes als sogenannter Formkörper 10 in zwei getrennten Formhälften 10a, 10b aus Faserverbundwerkstoff laminiert und heiss oder kalt ausgehärtet, wobei die Heissaushärtung bei grossen bzw. grossflächigen Formkörpern wegen der langen Verarbeitungszeit dem Kaltverfahren vorzuziehen ist. Der Lagenaufbau setzt sich aus einer im Diagonallaminat hergestellten ersten Blatthaut 11, einer inneren zweiten Blatthaut 14 für die Torsionskräfte und aus dem Unidirektionallaminat 12 zur Aufnahme der Längskräfte aus Biegung und Fliehkraft zusammen, wobei das Unidirektionallaminat 12, das entlang der gesamten Flügellänge liegt, über den ganzen Profilquerschnitt verteilt sein kann oder auch nur in bestimmten Bereichen laminiert wird. Diese Bereiche richten sich nach der zu erwartenden Belastung bzw. den aufzunehmenden Kräften. Die Dicke und Lage richtet sich nach den erforderlichen Massen, Steifigkeiten, Festigkeiten und Schwerpunktlagen. Meistens wird beispielsweise im hinteren Profilbereich – der sogenannten Fahne – eine leichte Struktur gewünscht. Hierzu schlägt die Erfindung eine selbsttragende Sandwichstruktur vor. Allgemein können die vorgeschlagenen Laminate im Handlaminierverfahren, aber auch als sogenannte Prepregs oder gar im Vakuuminjektionsverfahren hergestellt werden.

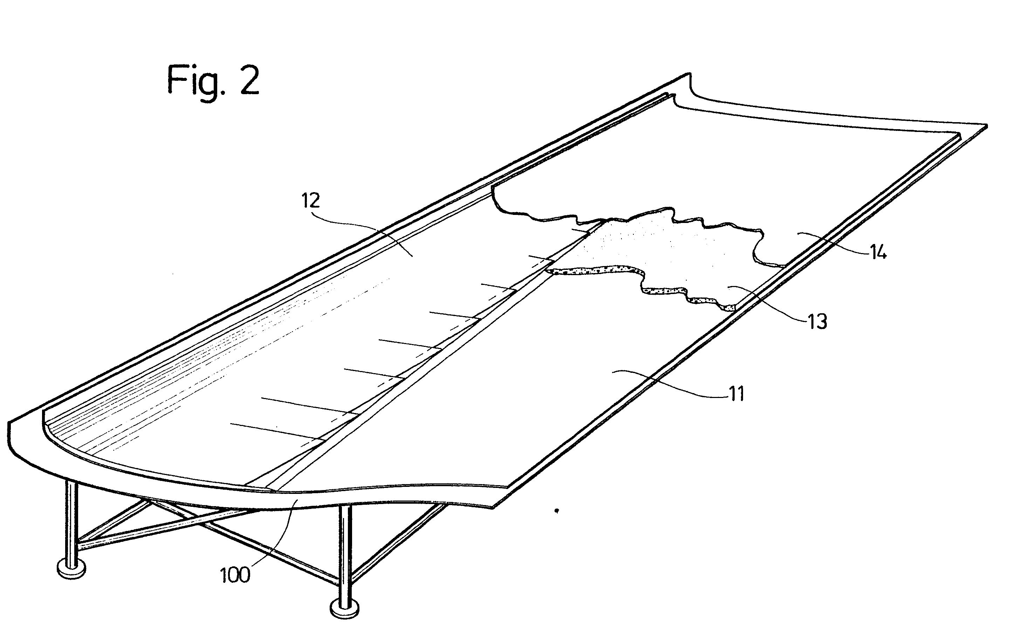

Die Figur 2 zeigt den Fertigungsablauf und den Aufbau der Saugdruckseitenschale, wobei die erste Blatthaut 11 auf dem Formtisch 100 ausgelegt und laminiert wird.

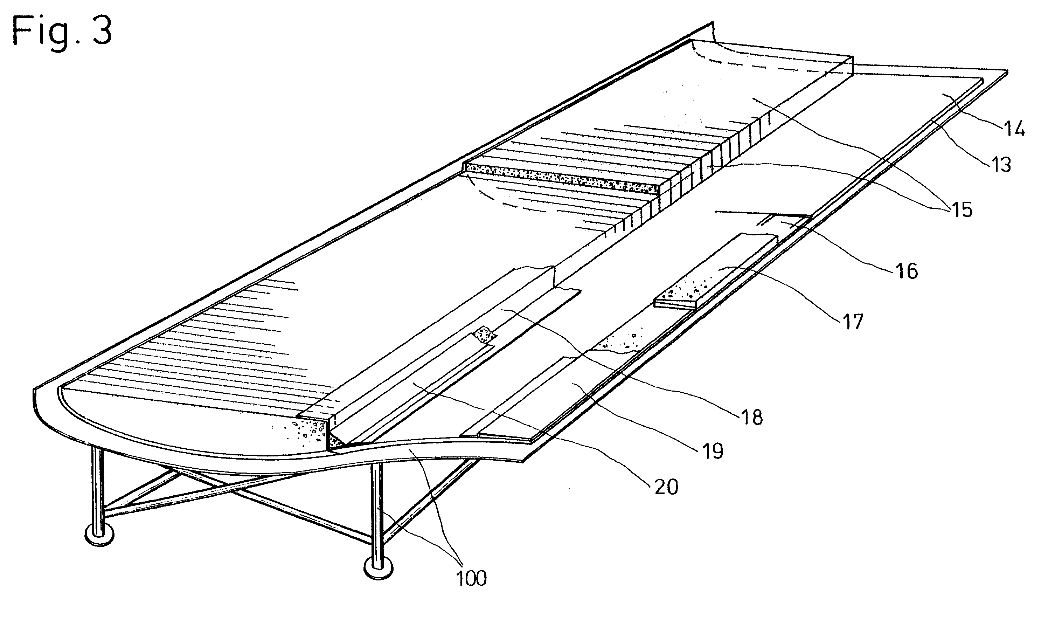

Die Fig. 3 zeigt den Aufbau des inneren Flügels bzw. die Herstellung des sogenannten Schaumkernes. Dieser Schaumkern wird ebenfalls in Hälften in den jeweiligen Formschalen der Laminierform 100 direkt hergestellt. Zur Fertigung des Rohteiles sind zwei Verfahren möglich, einmal das freie Ausschäumen und zum andernmal die Herstellung aus Plattenmaterial. Im ersteren, nicht die Erfindung betreffenden Fall wird in die offene Schalenstruktur ein freischäumender Werkstoff eingespritzt. Der dabei entstehende Schaumkörper füllt den gesamten Innenraum des Profiles aus, wobei beispielsweise auch ein Bereich durch Trennwände freigehalten werden kann, wie z.B. an der «Endfahne». Dieses Verfahren hat jedoch den Nachteil, dass Schaumwerkstoffe verwendet werden müssen, die bei hoher dynamischer Beanspruchung der Gefahr einer Zerstörung ausgesetzt sind. Somit sind im vorliegenden Falle die auftretenden Belastungen für die Verwendung dieses Verfahrens ausschlaggebend und für Formkörper, die einer hohen Lastenwechselzahl unterworfen sind nicht geeignet. Schaumwerkstoffe, die diesen hohen Anforderungen gerecht werden, müssen in geschlossenen Formen hergestellt sein und damit also als Plattenmaterial verwendet werden.

Dies schlägt das Verfahren nach der Erfindung vor.

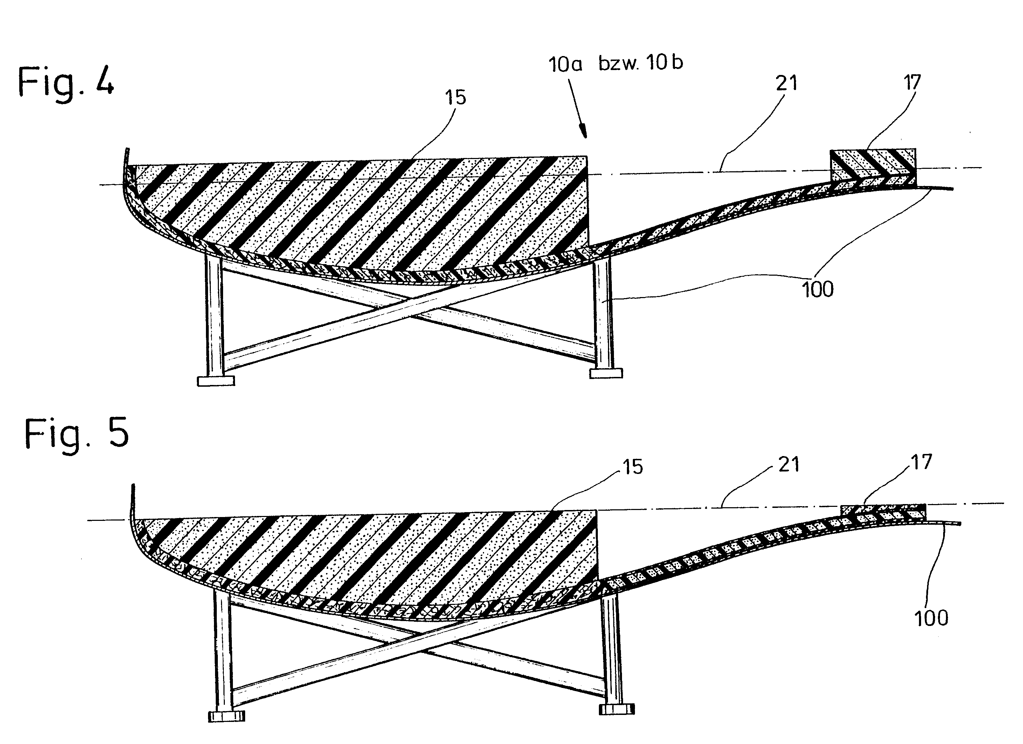

Hier werden nun die Hälften der Schaumkerne aus Schaumstegelementen 15, also aus Plattenmaterial – beispielsweise von ca. 80 cm Dicke – in Scheiben zusammengesetzt und miteinander verklebt. Die Scheiben entsprechen den Innenkonturen der einlaminierten Schalenhälften. Die genaue Kontur kann durch Einpassen ermittelt werden, wobei die jeweils vorherige Schaumscheibe bzw. das Schaumstegelement 15 als Schablone für die nächste Scheibe dient. Spalte, die durch grobe Einpassung entstehen, können durch schäumbare Kleber geschlossen werden. Dadurch wird also ein geschlossener Schaumkern erhalten, der nur noch in der Trennebene 21 zu bearbeiten ist. Dies trifft für beide Formhälften 10a, 10b zu. Die überstehenden Schaumstoffteile von 15 und 17 (Fig. 4) werden mittels einer geführten Schneidvorrichtung abgetrennt. Die so bearbeiteten Flügelhälften – also Oberschale 10a und Unterschale 10b als Formkörperhälften – werden an der gemeinsamen Trennebene 21 miteinander verklebt.

Der Fertigungsablauf vollzieht sich also wie folgt: In der Laminierform für die untere Formkörperhälfte 10b oder auch Unterschale genannt, bzw. der Form für die obere Formkörperhälfte 10a oder auch Oberschale genannt, wird jeweils die erste Blatthaut 11 aus Faserverbundwerkstoff im Diagonallaminat hergestellt, anschliessend wird darauf der Holm aus Unidirketionallaminat 12 aufgebracht, wobei dies entlang der gesamten Formkörperlänge und über den ganzen oder nur in Teilbereichen des Profilquerschnittes geschehen kann. Dann werden im Profilfahnenbereich Schaumplatten 13 eingelegt und angepasst und darauf die innere Blatthaut 14 laminiert, ebenfalls im Diagonallaminat aus Faserverbundwerkstoff. Der innere Flügel- bzw. Rotorblattaufbau sieht nun für beide Formkörperhälften wieder im gleichen Verfahren vor: Anfertigung des Schaumsteges aus einzelnen Schaumstegelementen 15, wobei diese mit ihrer Oberkante bzw. Oberfläche über die sogenannte Trennebene 21 ragen. Dann werden diese Elemente 15 – wie in Fig. 3 dargestellt – auf die Torsionsschale 11, 12, 13, 14 eingeklebt oder eingelegt und das Endkantenlaminat 16 im Fahnenbereich angefräst.

Auf dieser Anfräsung 16 werden nun Schaumplatten 17 aufgeklebt, wobei diese Schaumplatten 17 ebenfalls ihrer Höhe nach über die sogenannte Trennebene 21 ragen. Mittels einer geführten Vorrichtung werden nun die Schaumstegelemente 15 und die Hinterkantenschaumplatten 17 genau in der Trennebene 21 abgefräst oder abgeschnitten. Anschliessend wird das Schublaminat 18 und das Hinterkantengewebe 19 eingebracht bzw. laminiert und zwar kurz vor dem Zusammenfügen der beiden Formhälften 10a, 10b. Zum Schluss werden noch die Versteifungswinkel 20 eingeklebt, die die Schaumstegelemente 15 in ihrer Lage einwandfrei fixieren und halten.

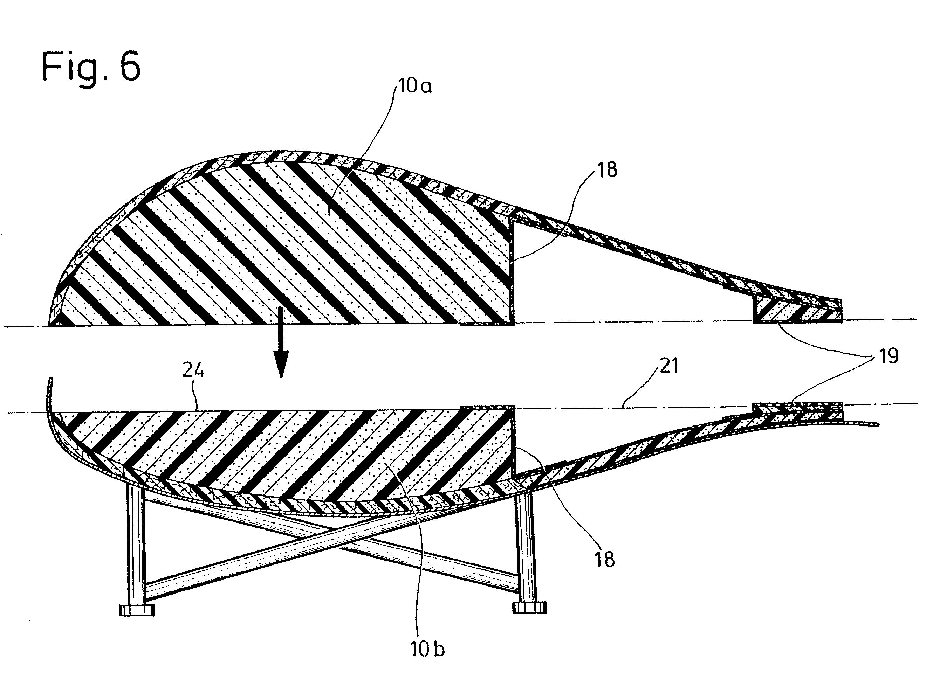

Die Fig. 6 zeigt den Moment der unmittelbaren Zusammenfügung der beiden Formkörperhälften 10a, 10b. Auf allen in der Trennebene liegenden Flächen von 10a, 10b, und 19 wird ein Schaumkleber aufgebracht und dann die beiden Formkörperhälften zusammengefügt. Über die Aushärtung bei den Laminatvorgängen ist eingangs schon gesprochen worden. Die Aushärt- bzw. Trocknungszeiten bei den Klebvorgängen richten sich nach dem jeweiligen verwendeten Schaumstoffkleber.

Zur Fertigstellung des entformten Flügels werden nun noch die Nasenschale 25 und die Endkantenverstärkung 26 angebracht.

Durch die vorgeschlagenen Fertigungsmassnahmen wird nun nicht nur die Herstellung grossflächiger Formkörper ermöglicht, sondern im einzelnen noch weitere Vorteile erzielt, wie beispielsweise eine homogene Stützung oder Schale durch den Schaumkern, die Verwendung jedes geeigneten Schaumstoffes in beliebiger Halbzeugabmessung, die Herstellung in offenen Formen und die vollständige Kontrollmöglichkeit über den gesamten Fertigungszeitraum und damit verbunden die gegebenen Korrekturmöglichkeiten.

**Patentansprüche**

1. Verfahren zur Herstellung von schaumgestützten Formkörpern, wie Flügel, Rotorblätter etc. in Schalenbauweise, wobei in einer Laminierform (100) die Schale des Formkörpers (10) in zwei getrennten Formkörperhälften (10a, 10b) aus Faserverbundwerkstoff laminiert und ausgehärtet wird und der Schaumkern in jeder Schale des Formkörpers direkt hergestellt und die Formkörperhälften in ihren Trennebenen plan gefräst bzw. geschnitten und dann miteinander verklebt werden, dadurch gekennzeichnet, dass in der Laminierform (100) für die jeweilige Formkörperhälfte (10a, 10b) eine erste Blatthaut (11) aus Faserverbundwerkstoff im Diagonallaminat eingebracht wird und darauf ein Holm aus einem Unidirektionallaminat (12) positioniert wird sowie im Profilfahnenbereich Schaumplatten (13) formgerecht eingelegt werden und darauf eine zweite Blatthaut (14) im Diagonallaminat eingebracht wird und auf der aus den Elementen (11, 12, 13, 14) gebildeten Torsionsschale der Schaumkern aus einzelnen Schaumstegelementen (15) zusammengesetzt und verklebt wird.

2. Verfahren nach Anspruch 1, dadurch gekennzeichnet, dass der entformte Formkörper (10) mit Nasen- (25) und Endkantenverstärkungen (26) versehen wird.

3. Verfahren nach Anspruch 1, dadurch gekennzeichnet, dass das Unidirektionallaminat (12) entlang der gesamten Länge des Formkörpers (10) angeordnet und über den ganzen Profilquerschnitt verteilt ist.

4. Verfahren nach Anspruch 1, dadurch gekennzeichnet, dass das Unidirektionallaminat (12) entlang der gesamten Länge des Formkörpers (10) und nur im vorderen Teilbereich des Profilquerschnitts laminiert ist.

5. Verfahren nach den Ansprüchen 1 bis 3, dadurch gekennzeichnet, dass der hintere Profilbereich des Formkörpers (10) als selbsttragende Sandwichstruktur ausgebildet ist.

## Claims

1. A method of producing foam-supported moulded bodies, such as wings, rotor blades, etc., in shell construction, in which respect in a laminating mould (100) the shell of the moulded body (10) is laminated in two separate moulded body halves (10a, 10b) made of fibre composite material and hardened and the foam core is directly produced in each shell of the moulded body and the moulded body halves are face-milled or, respectively, cut in their planes of separation and are then glued to one another, characterised in that in the laminating mould (100) for the respective moulded body half (10a, 10b) a first blade skin (11) of fibre composite material in diagonal laminate is introduced and a spar made of a unidirectional laminate (12) is positioned thereon and in the profile vane region foam plates (13) are inserted in a manner that conforms to shape and thereon a second blade skin (14) in diagonal laminate is introduced and on the torsion shell formed from the elements (11, 12, 13, 14) the foam core is assembled from individual foam web elements (15) and glued.

2. A method according to claim 1, characterised in that the moulded body (10) removed from the mould is provided with nose- (25) and end-edge reinforcements (26).

3. A method according to claim 1, characterised in that the unidirectional laminate (12) is arranged along the entire length of the moulded body (10) and is distributed over the entire profile cross-section.

4. A method according to claim 1, characterised in that the unidirectional laminate (12) is arranged along the entire length of the moulded body (10) and is laminated only in the front partial region of the profile cross-section.

5. A method according to claims 1 to 3, characterised in that the rear profile region of the moulded body (10) is designed as a self-supporting sandwich structure.

## Revendications

1. Procédé de fabrication de pièces profilées à noyau de mousse telles que: ailes, pales de rotor, etc... en construction monocoque, pour lequel, dans un moule (100), la coque de la pièce profilée (10) est formée de deux parties distinctes (10a, 10b) en matériau composite à fibres, puis durcie, le noyau de mousse est directement formé dans chaque coque de la pièce profilée et les moitiés de la pièce profilée sont fraisées ou découpées de façon plane selon leurs plans de séparation puis collées l'une à l'autre, caractérisé en ce que pour chaque moitié de la pièce profilée (10a, 10b), une première couche (11) en matériau composite à fibres à stratification croisée est disposée dans le moule (100), un longeron à stratification unidirectionnelle (12) est placé sur cette première couche, des panneaux de mousse (13) sont placés, de façon à en épouser la forme, dans la zone de traînée du profil, puis une deuxième couche (14) à stratification croisée est placée sur l'ensemble, et le noyau de mousse, composé d'éléments d'âme (15) individuels, est assemblé et collé sur la coque de torsion formée par les éléments (11, 12, 13, 14).

2. Procédé selon la revendication 1, caractérisé en ce que la pièce profilée (10) démoulée est munie de renforts de bord d'attaque (25) et de bord de fuite (26).

3. Procédé selon la revendication 1, caractérisé en ce que la couche à stratification unidirectionnelle (12) est disposée selon toute la longueur de la pièce profilée (10) et répartie sur toute la section du profil.

4. Procédé selon la revendication 1, caractérisé en ce que la couche à stratification unidirectionnelle (12) est disposée selon toute la longueur de la pièce profilée (10), uniquement à la partie avant de la section du profil.

5. Procédé selon les revendications 1 à 3, caractérisé en ce que la partie arrière du profil de la pièce profilée (10) est réalisée en structure sandwich autoportante.

Fig.1

Fig. 2

0 037 987

Fig. 3

14
13
15
16
17
18
19
20
100

0 037 987

6

Fig. 4

10a bzw. 10b

Fig. 5

# Fig. 6